# EUROPÄISCHE PATENTSCHRIFT

(11) **EP 1 357 782 B1**
(45) Veröffentlichungstag und Bekanntmachung des Hinweises auf die Patenterteilung: **26.07.2006**
(21) Anmeldenummer: 02702336.5
(22) Anmeldetag: 01.02.2002
(51) Int. Cl.: A01D 34/82

(54) **FAHRBARES BODENBEARBEITUNGSGERÄT, INSBESONDERE RASENMÄHER**
TRAVELLING SOIL CULTIVATION APPLIANCE, ESPECIALLY A LAWNMOWER
MACHINE ROULANTE POUR LE TRAVAIL DU SOL, EN PARTICULIER TONDEUSE A GAZON

(30) Priorität: 03.02.2001 DE 10105005
(43) Veröffentlichungstag der Anmeldung: 05.11.2003
(73) Patentinhaber: GARDENA Manufacturing GmbH, 89079 Ulm (DE)
(72) Erfinder: HÄUFELE, Reiner, Laupheim 88471 (DE); LINDERMEIR, Wolfgang, 89617 Untermarchtal (DE); SCHAUB, Ulrich, 89073 Ulm (DE)
(74) Vertreter: Patentanwälte Ruff, Wilhelm, Beier, Dauster & Partner
(86) Internationale Anmeldenummer: PCT/EP2002/001059
(87) Internationale Veröffentlichungsnummer: WO 2002/062126

(56) Entgegenhaltungen:
- EP-A- 0 170 635
- CH-A- 678 044
- DE-A- 2 448 129
- US-A- 2 809 490
- PATENT ABSTRACTS OF JAPAN vol. 017, no. 333 (C-1074), 24. Juni 1993 (1993-06-24) & JP 05 038218 A (KUBOTA CORP), 19. Februar 1993 (1993-02-19)
- PATENT ABSTRACTS OF JAPAN vol. 1998, no. 12, 31. Oktober 1998 (1998-10-31) & JP 10 191746 A (NORIN SUISANSYO SHIKOKU NOGYO SHIKENJO;NIKKARI CO LTD), 28. Juli 1998 (1998-07-28)

## Beschreibung

Die Erfindung betrifft ein fahrbares Bodenbearbeitungsgerät, insbesondere einen Rasenmäher mit einem Gehäuse zur Aufnahme der Bearbeitungselemente und mit einer von einer Bedienungsperson handhabbaren Führungseinrichtung, die am Gehäuse schwenkbar zu einer im wesentlichen vertikal zur Bearbeitungsebene verlaufenden Achse angeordnet ist.

Fahrbare Rasenmäher besitzen als Führungseinrichtung üblicherweise einen Schubbügel, der mit beiden Schenkeln fest am Gehäuse angeordnet ist. Das Gehäuse besitzt in der Regel vier Räder, die jeweils paarweise auf einer vorderen und einer hinteren Radachse angeordnet sind. Die Vorderräder können auch durch einziges mittiges Frontrad ersetzt sein. Solche Rasenmäher werden entweder durch einen motorischen Antrieb der Hinterräder oder auch durch die Bedienungsperson über den Schubbügel fortbewegt, wobei der am Gehäuse des Rasenmähers befestigte Schubbügel auch zur Lenkung des Mähers durch seitlichen Druck und/oder Abheben nicht schwenkbarer Vorderräder vom Boden dient. Solche Rasenmäher oder andere Bodenbearbeitungsgeräte weisen den Nachteil auf, dass eine Lenkung und Führung des Gerätes nur dann möglich ist, wenn die Bedienungsperson sich entweder vor oder, wenn der Schubbügel schwenkbar angeordnet ist, hinter dem Rasenmäher befindet. Soll unterhalb von Hindernissen wie beispielsweise überhängende Gebüsche gearbeitet werden, dann wird die Führung schwierig oder unmöglich.

Es ist deshalb auch ein Rasenmäher mit einem schwenkbaren Führungsbügel bekannt geworden (DE-OS 2 448 129), bei dem der Führungsbügel an einem gegenüber dem Mähergehäuse verdrehbaren Ring so angelenkt ist, dass er um die Drehachse des Ringes in Schritten von 90° und um seine horizontale Anlenkachse bis zum einem Winkel 180° verschwenkbar ist. Diese Ausgestaltung erlaubt eine Ausrichtung des Schubbügels in eine Richtung senkrecht zur Fahrtrichtung. Die Führung aus Zwischenstellungen, die durchaus wünschenswert ist, ist jedoch nicht möglich.

Der vorliegenden Erfindung liegt daher die Aufgabe zugrunde, ein Bodenbearbeitungsgerät, insbesondere einen Rasenmäher der eingangs genannten Art so auszugestalten, dass eine Führung und Lenkung aus allen Positionen möglich ist.

Diese Aufgabe wird bei einem Bodenbearbeitungsgerät der eingangs genannten Art dadurch gelöst, dass die Führungseinrichtung mit einer verdrehbaren Lenkeinrichtung versehen ist, deren Drehbewegung am oder im Gehäuse in ein Drehmoment um eine vertikale Achse umsetzbar ist. Durch diese Ausgestaltung wird die bisher nur über einen außen am Gehäuse angreifenden Schubbügel gegebene Möglichkeit, das Bodenbearbeitungsgerät zu lenken, nun in eine Ausgestaltung geändert, bei der das Drehmoment über ein von der Bedienungsperson durch Drehung auf eine Lenkeinrichtung ausgeübtes Drehmoment in ein auf das Gehäuse des Bodenbearbeitungsgerätes oder des Rasenmähers ausgeübtes Drehmoment übertragen wird. Die Führungseinrichtung kann daher frei beweglich um die vertikal zur Bearbeitungsebene verlaufende Achse ausgestaltet werden, da sie nicht, wie bei den bekannten Bauarten, unmittelbar als Hebel zur Ausübung von Lenkkräften dient.

In Weiterbildung der Erfindung kann die Lenkeinrichtung aus einer Lenkwelle mit einem einer Bedienungsperson zugewandten Lenkrad oder einem Lenkbügel bestehen. Die Lenkwelle kann dabei vorteilhaft als eine Teleskopwelle ausgebildet sein, die es auch erlaubt, das Bearbeitungsgerät aus in gewissem Umfang unterschiedlichen Entfernungen zu führen.

In Weiterbildung der Erfindung kann dabei die Lenkwelle unter einem vorgegebenen Winkel zur Bearbeitungsebene ausgerichtet und am Gehäuse an einem Lagerkörper angebracht sein, der um die vertikale Achse schwenkbar im Gehäuse gelagert ist. Im Gegensatz zu der eingangs erwähnten bekannten Bauart, bei der der schwenkbare Ring, an dem der Schubbügel angeordnet wird, jeweils in um 90° versetzten Stellungen fest arretierbar sein muss, um über den Schubbügel die Führung zu ermöglichen, kann der Lagerkörper frei beweglich angeordnet werden, da er nicht als Element dient, mit dem ein Drehmoment übertragen werden muss. Die Lenkwelle kann daher aus verschiedenen Positionen zum Gehäuse des Rasenmähers oder dergleichen geführt sein, was die Bearbeitungsmöglichkeiten wesentlich verbessert.

In Ausgestaltung der Erfindung kann die Lenkwelle den Lagerkörper durchsetzen und mit mindestens einer Abkröpfung an einer Abstützftäche des Gehäuses angreifen, die mindestens in einer parallel zur Bearbeitungsebene verlaufenden Richtung im Abstand zum Lagerkörper angeordnet ist.
Diese Ausgestaltung erlaubt die Ausübung von Seitenkräften auf das Gehäuse des Bodenbearbeitungsgerätes die, da ihre Angriffspunkte in der Längsrichtung des Gehäuses unterschiedlich sind, ein Drehmoment auf das Gehäuse zum Zweck der Führung ausüben.

In Weiterbildung der Erfindung kann die Abstützfläche Teil eines fest im Gehäuse gehaltenen Führungsgehäuse für den Lagerkörper sein, das einen Schacht mit parallel zur Fahrtrichtung des Bodenbearbeitungsgerätes ausgerichteten Seitenwänden bildet, die als Abstützflächen dienen. Eine solche Ausgestaltung erlaubt eine Verschwenkung der Lenkwelle um die vertikale Achse, wobei deren Abkröpfung zwar auch an unterschiedlichen Stellen zur Anlage kömmt, aber stets an den Seitenwänden des Schachtes anliegt und so die Ausübung der notwendigen Lenkkräfte ermöglicht.

In einer vorteilhaften, weil sehr einfachen Ausführungsform kann die Abkröpfung der Lenkwelle als ein seitlich abstehender Arm ausgebildet sein, der am freien Ende mit einem an beiden Seitenwänden des Schachtes geführten Gleitkörper versehen ist. Diese Ausgestaltung gibt die Gewähr dafür, dass in allen Schwenklagen der Lenkwelle der Gleitkörper Seitenkräfte in der einen oder anderen Richtung auf das Gehäuse ausübt, die mit den von der Gegenlagerung der Lenkwelle im Lagerkörper ausgeübten Gegenkräften das gewünschte Lenkdrehmoment ergeben.

Die bisher beschriebene Ausgestaltung nach der Erfindung sieht eine Lenkwelle vor, die unter einem vorgegebenen und fest bleibenden Winkel zur Bearbeitungsebene ausgerichtet ist. Es ist aber auch möglich, dass der den Lagerkörper durchsetzende Teil der Lenkwelle an der zur Bedienungsperson weisenden Seite des Lagerkörpers gelenkig an dem weiteren Teil der Lenkwelle angebracht ist, was beispielsweise über ein Kreuzgelenk geschehen kann. Bei einer solchen Ausführungsform ist die Lenkwelle frei um die vertikale Schwenkachse des Lagerkörpers beweglich, aber auch relativ zur Bodenbearbeitungsebene, zumindest in gewissem Umfang schwenkbar, so dass die Führungs- und Bearbeitungsmöglichkeiten noch weiter erweitert werden. Die von der Bedienungsperson gehaltene Lenkwelle kann damit nämlich höher oder tiefer relativ zum Boden gehalten werden.

Eine weitere Ausführungsform, die eine gewissen Höhenänderung bei der Handhabung der Lenkwelle ermöglicht, besteht darin, dass die Lenkwelle an dem dem Gehäuse zugewandten Ende mit einem Kegelrad versehen ist, das mit einer korrespondierenden am Gehäuse festen Zahnscheibe zusammenwirkt. Auch bei einer solchen Ausführungsform, bei der natürlich auch eine Verschwenkbarkeit um die vertikale Achse vorliegt, kann die Lenkwelle ebenfalls in gewissem Umfang mehr oder weniger angehoben oder abgesenkt werden, ohne dass die Führungsfunktion verloren geht.

In weiteren Ausgestaltung der Erfindung kann die Lenkwelle schließlich auch als eine flexible Welle ausgebildet sein, die beispielsweise in einem um eine vertikale Achse schwenkbaren Trägerkörper geführt sein kann. Auch eine solche Ausgestaltung, bei der das Bodenbearbeitungsgerät zweckmäßig motorisch angetrieben sein sollte, wird möglich, weil erfindungsgemäß das Drehmoment zur Lenkung des Bodenbearbeitungsgerätes nicht über eine Hebelwirkung eines Schubbügels oder dergleichen ausgeübt wird. Versuche haben gezeigt, dass mit der, neuen, erfindungsgemäßen Ausgestaltung eine einwandfreie Führungs-Lenkmöglichkeit für das Bodenbearbeitungsgerät bzw. für einen Rasenmäher gegeben ist. Als besonders zweckmäßig hat es sich dabei, wenn das Gehäuse mit Vorder- und Hinterrädern versehen ist, erwiesen, die vertikale Achse, um die das Drehmoment ausgeübt wird, zwischen Vorder- und Hinterräder zu legen und den Abstand der vertikalen Achse in Längsrichtung des Gehäuse weniger als 30% des Abstandes zwischen Hinter- und Vorderradachsen betragen zu lassen.

Möglich ist es auch, an der Vorderradanordnung eine oder zwei Lenkrollen vorzusehen. Es hat sich aber gezeigt, dass auch ausgezeichnete Lenkmöglichkeiten bestehen, wenn die Radanordnungen nicht lenkbar ausgebildet sind und die Laufflächen der Räder einen geringen Gleitwiderstand gegen seitliche Verschiebung aufweisen.

Ausführungsformen mit einer starren oder auch mit einer in ihrer Länge blockierbaren Teleskopwelle als Lenkwelle erlauben auch die Fortbewegung des Bodenbearbeitungsgerätes oder des Rasenmähers durch eine Bedienungsperson von Hand durch Schieben

Die Führungseinrichtung kann schließlich auch noch abnehmbar am Gehäuse angebracht sein, um das Bodenbearbeitungsgerät bzw. den Rasenmäher für Transport- oder Aufbewahrungszwecke kompakter machen zu können.

Die Erfindung ist in der Zeichnung anhand von Ausführungsbeispielen gezeigt und wird im nachfolgenden erläutert. Es zeigen:
- Fig. 1: die Draufsicht auf einen Rasenmäher nach der Erfindung mit einem Gehäuse mit vier Laufrädern,
- Fig. 2: eine Variante der Ausführungsform der Fig. 1 mit einer anderen Vorderradausgestaltung,
- Fig. 3: die Seitenansicht des Rasenmähers der Fig. 1,
- Fig. 4: eine schematische Darstellung des Rasenmähers nach den Fig. 1 und 3 in einer Draufsicht bei Kurvenfahrt,
- Fig. 5: eine schematische Teildarstellung einer Lenkeinrichtung nach der Erfindung in einer gegenüber den Fig. 1 bis 4 anderen Ausführungsform,
- Fig. 6: die perspektivische Darstellung eines Rasenmähers in einer weiteren Ausführungsform,
- Fig. 7: die vergrößerte Teildarstellung eines Schnittes längs der Ebene VII in Fig. 6 im Angriffsbereich der Lenkwelle,
- Fig. 8: die Draufsicht auf das teilweise im Schnitt nach Fig. 7 gezeigte Führungsgehäuse, und
- Fig. 9: die perspektivische Seitenansicht des Führungsgehäuses nach den Fig. 7 und 8.

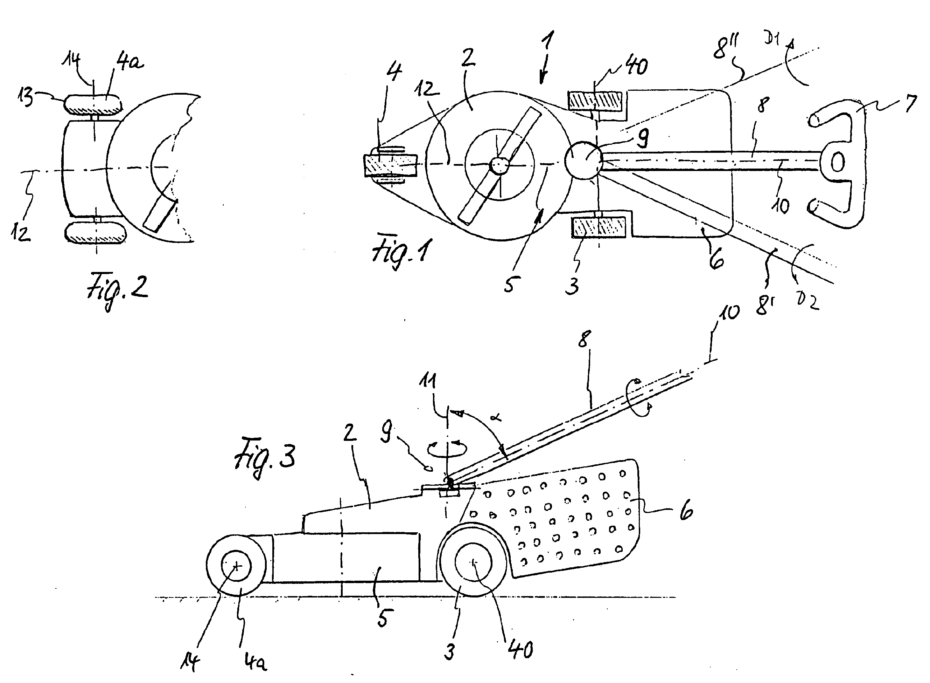

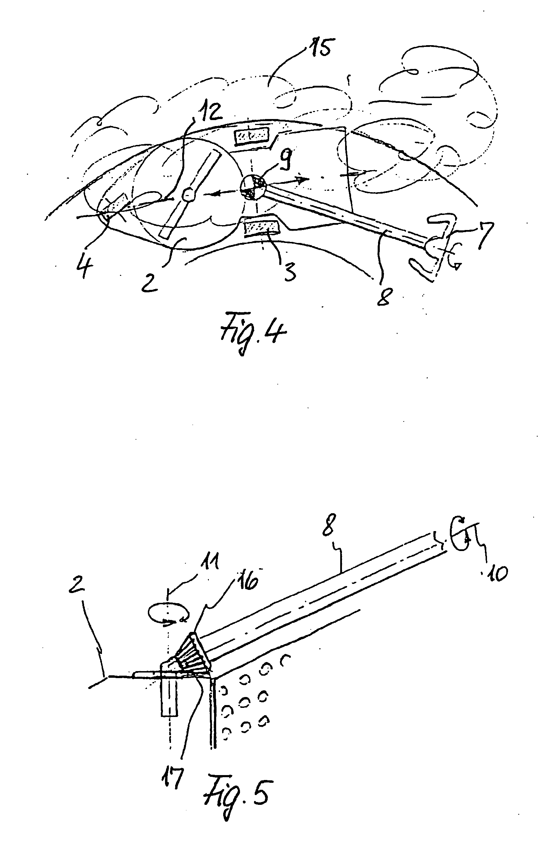

Der in den Fig. 1 und 3 skizzierte Rasenmäher 1 besitzt ein Gehäuse 2, das auf zwei Hinterrädern 3 mit fluchtenden Radachsen und einem Vorderrad 4, welches z.B. als um eine vertikale Achse frei schwenkbare Lenkrolle ausgeführt sein kann, fahrbar ist. Zwischen Hinterradachse 40 und Vorderrad 4 sind im Mähergehäuse 2 Motor und Messer 5 angeordnet. Ein Fangkorb 6 für Schnittgut ist am hinteren Ende des Mähers dem Benutzer zugewandt vorgesehen.

Der Benutzer bewegt den Rasenmäher über eine Führungseinrichtung, welche im gezeigten Beispiel einen benutzerseitigen Griffbügel 7 und eine von diesem zum Mähergehäuse 2 führende Lenkwelle 8 umfasst. Die Lenkwelle 8 ist am Mähergehäuse 2 in einem Lenkgetriebe 9 angelenkt und um ihre Längsachse 10 drehbar. Der Griffbügel ist drehfest mit der Lenkwelle verbunden. Das Lenkgetriebe 9 ist derart ausgestaltet, das eine Drehung der Lenkwelle 8 um ihre Längsachse 10 gekoppelt ist mit einer Schwenkung der Ausrichtung der Lenkstange um eine im wesentlichen vertikale Schwenkachse 11 im Lenkgetriebe 9 relativ zum Mähergehäuse. Durch diese Kopplung wird ein über den Griffbügel 7 von einer Bedienungsperson ausgeübtes Drehmoment um die Längsachse 10 der Lenkwelle 8 im Lenkgetriebe 9 umgesetzt in ein auf das Mähergehäuse 2 wirkendes Drehmoment um die vertikale Schwenkachse 11.

Die Bedienungsperson kann mit einer solchen Anordnung zum einen die Lenkwelle 8 um die vertikale Schwenkachse 11 schwenken und seitlich gegen die Längsachse 12 des Mähers versetzt eine Position einnehmen und zum anderen ohne Veränderung der eigenen Position durch Ausüben eines Drehmoments über den Griffbügel 7 auf die Lenkwelle 8 das Mähergehäuse 2 relativ zur Lenkwelle um die vertikale Schwenkachse 11 verschwenken. Die Schwenkachse 11 liegt in der Draufsicht vorteilhaft gering beabstandet von der Hinterachse 40. Der horizontale Abstand der Schwenkachse 11 von der gemeinsamen Hinterachse 40 der Hinterräder 3 beträgt vorzugsweise weniger als 30%, insbesondere weniger als 20% des horizontalen Abstands des Vorderrads 4 von der Hinterachse 40. Bei einer solchen Drehmomentausübung wird das Mähergehäuse 2 relativ zur Bedienungsperson um die Schwenkachse 11 geschwenkt, bis die gewünschte Ausrichtung erreicht ist.

Der Widerstand gegen die Veränderung der Ausrichtung ist insbesondere bei Einsatz einer schwenkbaren Lenkrolle 4 als Vorderrad gering, was in gleicher Weise für ein Lenkrollenpaar als seitlich beabstandete Vorderräder gilt. Es zeigt sich überraschenderweise, dass auch auf starren Achsen 14 laufende Vorderräder 4a, wie sie in der in Fig. 2 skizzierten Frontpartie eines Mähers gezeigt sind, auch eine solche Verschwenkung des Mähergehäuses erlauben, insbesondere, wenn solche starr ausgerichteten Räder 4a gering profilierte oder ganz glatte und deutlich gewölbte Laufflächen 13 aufweisen. Selbstverständlich kann auch ein einzelnes Vorderrad mit starrer Radachse vorgesehen sein.

In der Fig. 1 sind die Ausgangspositionen der Lenkwelle 8 mit durchgezogener Linie und zwei seitlich verschwenkte Ausrichtungen 8', 8" der Lenkwelle entsprechend entgegengesetzten Drehungen D1, D2 der Lenkwelle um ihre Lenkachse mit unterbrochener Linie eingezeichnet.

In der Fig. 4 ist eine Situation skizziert, bei welcher das Mähergehäuse 2 auf einer Kurvenbahn mit gegenüber seiner Längsachse 12 seitlich versetzter Position einer Bedienungsperson geführt ist und hierdurch beispielsweise auf einfache Weise unter einem Gebüsch 15 oder dergleichen an ansonsten schwer zugänglicher Stelle bequem eingesetzt werden kann.

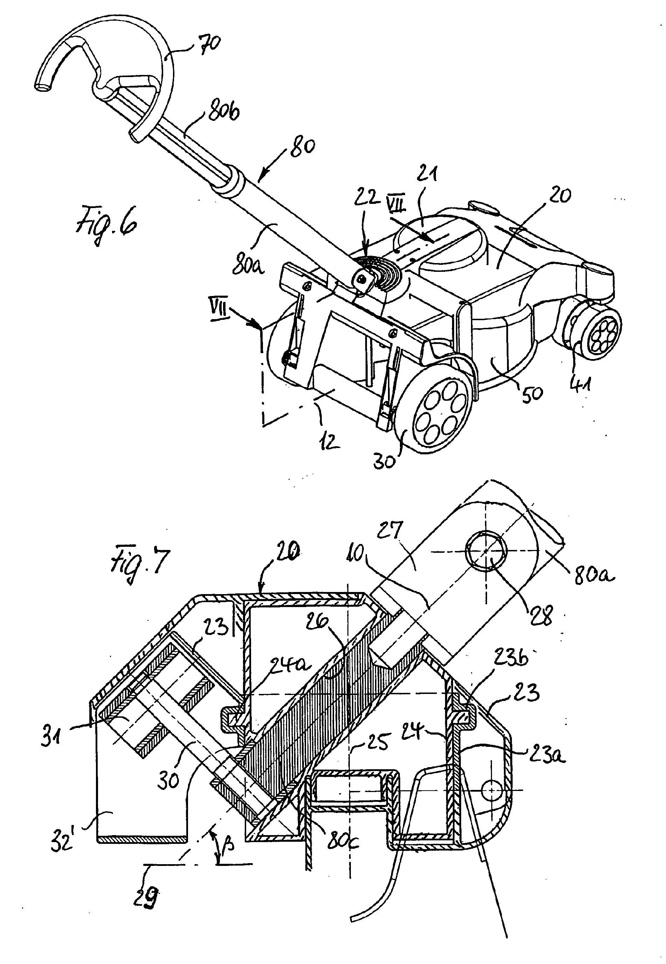

Das Lenkgetriebe 9 enthält gemäß der in Fig. 5 skizzierten Variante ein Kegelzahnradgetriebe mit einem mit der Lenkwelle um deren Längsachse drehbaren Kegelzahnrad 16 und einem Zahnkranz oder Zahnteilkranz 17 auf der Seite des Mähergehäuses 2. Eine andere Variante des Lenkgetriebes kann ein Kreuzgelenk, insbesondere ein versetztes Kreuzgelenk, ein Kugelkopfgelenk oder ein sonstiges Drehmomente mit Winkelversatz übertragendes Gelenk, vorsehen. Bei der Variante mit einem Kegelzahnradgetriebe 16, 17 ist der in der Seitenansicht nach Fig. 3 eingezeichnete Neigungswinkel α der Längsachse 10 der Lenkwelle 8 gegen die vertikale Schwenkachse 11 typischerweise fest oder nur in geringem Umfang veränderbar, wogegen bei der Variante eines Lenkgetriebes mit einem Kreuzgelenk dieser Winkel über einen größeren, allerdings auch begrenzten Bereich, veränderbar sein kann.

Den gezeigten verschiedenen Ausführungsformen gemeinsam ist, dass die Momentenachse 10 des vom Benutzer auf den Griffbügel ausgeübten Drehmoments nicht mit der Momentenachse 11 des auf das Mähergehäuse wirkenden Drehmoments zusammenfällt. Der Mäher kann sowohl selbstfahrend als auch geschoben sein.

Die Länge der Schubbügelanordnung ist vorzugsweise veränderlich einstellbar, was insbesondere, wie noch anhand der Fig. 6 erläutert werden wird, in besonders vorteilhafter Weise durch Ausbildung der Lenkwelle 8 als teleskopierbares Rohr realisiert sein kann.

Die Fig. 6 zeigt einen Rasenmäher, der ein fahrbares Gehäuse 20 mit jeweils Vorderrädern 41 und Hinterrädern 30 aufweist und das in ähnlicher Weise wie bei der Ausführungsform der Fig. 1 und 3 mit einem Motor und Messergehäuseteil 50 versehen ist. Das Gehäuse 20 ist an seiner Oberseite außer mit einem Deckel 21, der die Zugänglichkeit zum Antriebsmotor gibt, mit einer in Fig. 6 zu erkennenden Abdeckung 22 für ein Führungsgehäuse 23 versehen, das zur Aufnahme der Lenkwelle 80 dient, die hier aus zwei teleskopisch ineinander geführten Teilen 80a und 80b besteht. An dem Teil 80b ist ein Lenkrad 70 angeordnet, über das eine Bedienungsperson, ähnlich wie beim Ausführungsbeispiel der Fig. 1 und 3, ein Lenkdrehmoment auf das Gehäuse 20 des Rasenmähers ausüben kann.

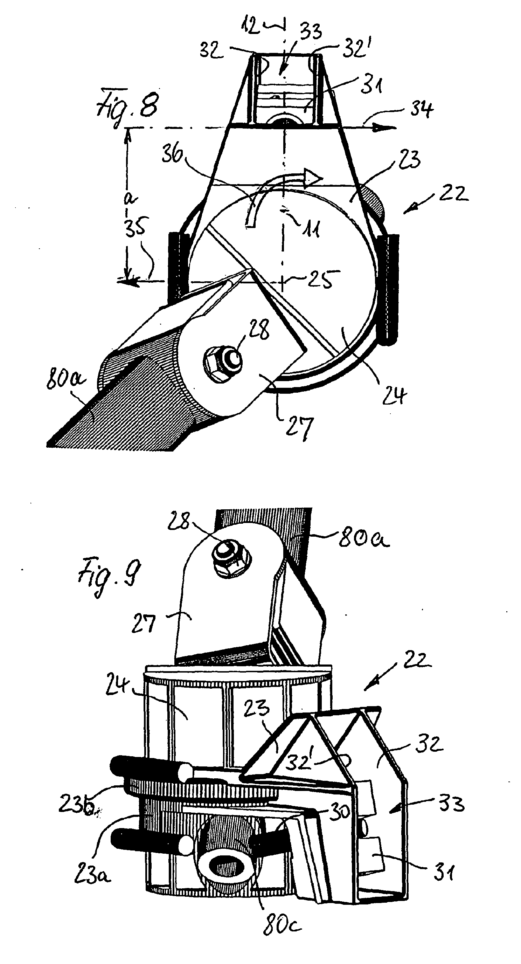

Das Führungsgehäuse 23 ist im Inneren des Gehäuses 20 fest angeordnet. Es besteht, wie die Fig. 7 bis 9 zeigen, aus einem nicht näher gezeigten fest in das Gehäuse 20 eingesetzten Gehäuseteil, in dem ein etwa zylindrischer Lagerkörper 24 drehbar um die Achse 25 gehalten ist, dadurch, dass er in eine entsprechende zylindrische Führung 23a des Führungsgehäuses 23 eingesetzt und mit einem Flansch 24a in einer entsprechenden Ringnut 23b des Führungsgehäuses gehalten ist. Der Lagerkörper 24 ist mit einer beim Ausführungsbeispiel unter einem Winkel β zu einer Ebene 29 geneigten zylindrischen Führung 26 versehen, in welche das zylindrische Ende der Lenkwelle 80 eingesetzt ist. Der Lenkwellenteil 80a besteht beim Ausführungsbeispiel nicht aus einem durchgehenden einstückigen Wellenteil, sondern aus dem Endstück 80c, das in der Führung 26 koaxial zur Lenkachse 10 verläuft und aus einer drehfest mit diesem Wellenende 80c verbundenen Lasche 27, in die wiederum mit Hilfe eines Verbindungsbolzens 28 der Wellenteil 80a abnehmbar, aber fluchtend zur Wellenachse 10 eingesetzt ist. Der Wellenteil 80a mit dem verschiebbar in ihm gehaltenen Wellenteil 80b und dem Lenkrad 70 ist deshalb abnehmbar angeordnet, damit der Rasenmäher zu Transport- oder Aufbewahrungszwecken nicht zu sperrig ist und zu viel Raum beansprucht.

In das Wellenende 80c ist an dessen freien Ende ein senkrecht zur Achse 10 abstehender Arm 30 in der Form eines Bolzens eingesetzt, der wiederum an seinem freien Ende mit einem drehbar an ihm gehaltenen Gleitstück 31 versehen ist. Dieses Gleitstück 31 wiederum liegt an den Seitenflächen 32 und 32' eines Schachtes 33 an, der einstückig am Führungsgehäuse 23 angebracht ist und sich mit seinen parallel zueinander verlaufenden Seitenwänden 32, 32' über eine Höhe erstreckt, die groß genug ist, um die Anlage des Gleitstückes 31 in allen Schwenklagen der Lenksäule 80 innerhalb des Schachtes 33 und die entsprechende Verschiebebewegung des Gleitstückes innerhalb des Schachtes 33 zu gewährleisten.

Wie aus den Fig. 6 bis 9 zu erkennen ist, bewirkt daher das Ausüben eines Drehmomentes auf das Lenkrad 70 ein Drehmoment in der Welle 80. Das Endstück 80c der Lenkwelle 80 seinerseits versucht dann den Arm 30 nach der einen oder anderen Richtung zu verschwenken. Das Gleitstück 31 des Armes 30 jedoch ist fest anliegend an den Seitenflächen 32 und 32' des Schachtes 33 geführt, so dass beispielsweise bei der Ausübung eines Drehmomentes im Uhrzeigersinn (Fig. 8) das Gleitstück 31 gegen die Seitenwand 32' gedrückt wird und dabei eine Seitenkraft im Sinn des Pfeiles 34 auf das Führungsgehäuse 23 und, da dieses fest im Gehäuse 20 angeordnet ist, auch auf dieses Gehäuse 20 ausübt. Die durch die Ausübung dieser Kraft im Sinn des Pfeiles 34 bewirkte Gegenkraft stützt sich über das Lenkwellenteil 80c im Lagerkörper 24 ab, der wiederum im entgegengesetzten Sinn zu der Kraft nach dem Pfeil 34 gegen sein Führungsgehäuse 23 drückt und so eine Kraft im Sinn des Pfeiles 35 auf das Führungsgehäuse und auf das Gehäuse 20 ausübt. Die beiden Kräfte, die im Sinn der Pfeile 34 und 35 wirken, ergeben daher ein Drehmoment auf das Gehäuse 20 im Sinn des Pfeiles 36, das um die vertikale Achse 11 wirkt und in gleicher Weise wie anhand des Ausführungsbeispieles der Fig. 1 bis 3 beschrieben, zur Führung des Rasenmähers ausgenützt werden kann.

Es wird dabei ohne weiteres auch klar, dass es auf eine Ausrichtung der unter dem Winkel β gegen die Bearbeitungsfläche geneigten Lenkwelle 80 in Fahrtrichtung, d.h. also in Richtung der Längsachse 12 oder der Schnittebene VII in Fig. 6, nicht ankommt. Die Lenkwelle 80 kann, wie auch schon in Fig. 1 gezeigt, schräg zu dieser Längsachse 12 verlaufen und auch gegenüber dieser während des Bearbeitungsvorganges verschwenkt werden. Dies bewirkt lediglich eine Verschiebung des Gleitstückes 31 innerhalb des Schachtes 33, stellt aber die Wirkungsweise des Lenkvorganges nicht in Frage.

Auch in diesem Fall ist es zweckmäßig, wenn die Laufflächen der Räder 41, gegebenenfalls auch der Räder 30, einen möglichst geringen Gleitwiderstand aufweisen. Es hat sich jedoch gezeigt, dass dies nicht unbedingt notwendig ist und dass ein über das Lenkrad 70 aufgebrachtes Drehmoment ausreichend groß sein kann, um die gewünschte Kurvenführung des Rasenmähers zu bewirken.

Es wäre auch möglich, anstelle der Lenkwelle 80, die quer zu ihrer Längsachse 10 starr ausgebildet ist, eine flexible Welle zu verwenden, über die auch das gewünschte Drehmoment in das Gehäuse 20 eingeleitet werden kann. Es ist auch möglich, die Lenkwelle 80 nicht mit dem abstehenden Arm 30 als Abkröpfung zu versehen, sondern sie innerhalb des Gehäuses 20 mit mindestens einer Abkröpfung auszurüsten, die in gleicher Weise wie beim gezeigten Ausführungsbeispiel eine Seitenkraft in einer Richtung auf das Gehäuse 20 ausübt und in der Längsrichtung des Gehäuses 20, also in Richtung der Längsachse 12, versetzt dazu eine Gegenkraft in entgegensetzter Richtung hervorruft, die wiederum zur Erzeugung des gewünschten Drehmoments auf das Gehäuse 20 dient.

Die neue Art und Weise der Lenkung eines Bodenbearbeitungsgerätes ermöglicht daher die kontinuierliche Veränderung der Position einer Bedienungsperson zum Gerät, ohne dass die Lenkfähigkeit des Gerätes dadurch beeinträchtigt wird.

## Patentansprüche

1. Fahrbares Bodenbearbeitungsgerät, insbesondere Rasenmäher, mit einem Gehäuse (2, 20) zur Aufnahme der Bearbeitungselemente (5, 50) und mit einer von einer Bedienungsperson handhabbaren Führungseinrichtung, die am Gehäuse (2, 20) schwenkbar zu einer im wesentlichen vertikal zur Bearbeitungsebene (25) verlaufenden Achse (11, 25) angeordnet ist,
**dadurch gekennzeichnet, dass**
die Führungseinrichtung mit einer verdrehbaren Lenkeinrichtung (7, 8; 70, 80) versehen ist, deren Drehbewegung am oder im Gehäuse (2, 20) in ein Drehmoment (36) um eine vertikale Achse (11, 25) umsetzbar ist.

2. Bodenbearbeitungsgerät nach Anspruch 1, **dadurch gekennzeichnet, dass** die Lenkeinrichtung aus einer Lenkwelle (8, 80) mit einem einer Bedienungsperson zugewandten Lenkrad (7, 70) oder Lenkbügel besteht.

3. Bodenbearbeitungsgerät nach Anspruch 2, **dadurch gekennzeichnet, dass** die Lenkwelle (8, 80) als Teleskopwelle ausgebildet ist.

4. Bodenbearbeitungsgerät nach Anspruch 2 oder 3, **dadurch gekennzeichnet, dass** die Lenkwelle 80 unter einem vorgegebenen Winkel (β) zur Bearbeitungsebene oder einer dazu parallelen Ebene (25) ausgerichtet und am Gehäuse (20) an einem Lagerkörper (24) angebracht ist, der um die vertikale Achse (25) schwenkbar im Gehäuse (20) gelagert ist.

5. Bearbeitungsgerät nach Anspruch 4, **dadurch gekennzeichnet, dass** die Lenkwelle (80) den Lagerkörper (24) durchsetzt und mit mindestens einer Abkröpfung (30) an einer Abstützfläche (32) des Gehäuses (20) angreift, die mindestens in einer parallel zur Bearbeitungsebene verlaufenden Richtung im Abstand (a) zum Lagerkörper (24) angeordnet ist.

6. Bearbeitungsgerät nach Anspruch 5, **dadurch gekennzeichnet, dass** die Abstützfläche (32) Teil eines fest im Gehäuse (20) gehaltenen Führungsgehäuse (23) für den Lagerkörper (24) ist, das einen Schacht (33) mit parallel zur Fahrtrichtung (12) des Bodenbearbeitungsgerätes ausgerichteten Seitenwänden (32, 32') bildet, die als Abstützflächen dienen.

7. Bodenbearbeitungsgerät nach Anspruch 6, **dadurch gekennzeichnet, dass** die Abkröpfung der Lenkwelle (80) als ein seitlich abstehender Arm (30) ausgebildet ist, der am freien Ende mit einem an beiden Seitenwänden (32, 32') des Schachtes (33) geführten Gleitkörper (31) versehen ist.

8. Bodenbearbeitungsgerät nach Anspruch 7, **dadurch gekennzeichnet, dass** der Gleitkörper (31) rotationssymmetrisch ausgebildet ist.

9. Bodenbearbeitungsgerät nach Anspruch 7, **dadurch gekennzeichnet, dass** der Gleitkörper (31) drehbar an dem Arm (30) angebracht ist.

10. Bodenbearbeitungsgerät nach Anspruch 5, **dadurch gekennzeichnet, dass** die Lenkwelle (8, 80) an der zur Bedienungsperson weisenden Seite des Lagerkörpers gelenkig angebracht ist.

11. Bodenbearbeitungsgerät nach Anspruch 10, **dadurch gekennzeichnet, dass** als Gelenk ein Kreuzgelenk vorgesehen ist.

12. Bodenbearbeitungsgerät nach Anspruch 2, **dadurch gekennzeichnet, dass** die Lenkwelle (8) an dem dem Gehäuse (2) zugewandten Ende mit einem Kegelrad (16) versehen ist, das mit einer korrespondierenden, am Gehäuse (2) festen Zahnscheibe (17) zusammenwirkt.

13. Bodenbearbeitungsgerät nach Anspruch 2, **dadurch gekennzeichnet, dass** die Lenkwelle als eine flexible Welle ausgebildet ist.

14. Bodenbearbeitungsgerät nach Anspruch 13, **dadurch gekennzeichnet, dass** die flexible Welle in einem um eine vertikale Achse (11) schwenkbaren Trägerkörper geführt ist.

15. Bodenbearbeitungsgerät nach Anspruch 1, **dadurch gekennzeichnet, dass** das Gehäuse (2, 20) mit Vorder- und Hinterrädern (3, 4; 30, 41) versehen ist und dass die vertikale Achse (11, 25) zwischen Vorder- und Hinterrädern liegt.

16. Bodenbearbeitungsgerät nach Anspruch 15, **dadurch gekennzeichnet, dass** der Abstand der vertikalen Achse (11, 25) in Längsrichtung des Gehäuses (2, 20) weniger als 30% des Abstandes zwischen Hinter- und Vorderradachsen beträgt.

17. Bodenbearbeitungsgerät nach Anspruch 16, **dadurch gekennzeichnet, dass** die Vorderradanordnung eine oder zwei Lenkrollen aufweist.

18. Bodenbearbeitungsgerät nach Anspruch 16, **dadurch gekennzeichnet, dass** die Radanordnungen nicht lenkbar sind und die Laufflächen (13) der Räder (4a) einen geringen Gleitwiderstand gegen seitliche Verschiebung aufweisen.

19. Bodenbearbeitungsgerät nach Anspruch 1, **dadurch gekennzeichnet, dass** die Führungseinrichtung (8, 80) abnehmbar am Gehäuse (2, 20) angebracht ist.

## Claims

1. Travelling soil cultivation appliance, particularly a lawnmower, having a housing (2,20) for receiving cultivation elements (5, 50) and with a guide mechanism which can be handled by an operator and which is pivotably located on the housing (2, 20) with respect to an axis (11, 25) substantially vertical to the cultivation plane (25), **characterised in that** the guide mechanism is provided with a rotatable steering device (7, 8; 70, 80), whose rotary movement at or in the housing (2, 20) can be converted into a torque (36) about a vertical axis (11, 25).

2. Soil cultivation appliance according to claim 1, **characterised in that** the steering device comprises a steering shaft (8, 80) with an operator-facing steering wheel (7, 70) or steering frame.

3. Soil cultivation appliance according to claim 2, **characterised in that** the steering shaft (8, 80) is constructed as a telescopic shaft.

4. Soil cultivation appliance according to either claim 2 or claim 3, **characterised in that** the steering shaft (80) is oriented under a predetermined angle (β) to the cultivation plane or to a plane (25) parallel thereto and on the housing (20) is fitted to a bearing body (24), which is mounted in the housing (20) so as to pivot about the vertical axis (25).

5. Cultivation appliance according to claim 4, **characterised in that** the steering shaft (80) traverses the bearing body (24) and acts with at least one offset (30) on a support surface (32) of the housing (20), located at least in a direction parallel to the cultivation plane at a distance (a) from the bearing body (24).

6. Cultivation appliance according to claim 5, **characterised in that** the support surface (32) is part of a guide casing (23) for the bearing body (24) held in fixed manner in the housing (20) and which forms a shaft (33) with side walls (32, 32') oriented parallel to the direction of travel (12) of the soil cultivation appliance and which serve as support surfaces.

7. Soil cultivation appliance according to claim 6, **characterised in that** the offset of the steering shaft (80) is constructed as a laterally projecting arm (30) provided at its free end with a slider (31) guided on both side walls (32, 32') of shaft (33).

8. Soil cultivation appliance according to claim 7, **characterised in that** the slider (31) has a rotationally symmetrical construction.

9. Soil cultivation appliance according to claim 7, **characterised in that** the slider (31) is fitted in rotary manner to the arm (30).

10. Soil cultivation appliance according to claim 5, **characterised in that** the steering shaft (8, 80) is fitted in articulated manner to the bearing body side directed towards the operator.

11. Soil cultivation appliance according to claim 10, **characterised in that** a universal joint is provided as the joint.

12. Soil cultivation appliance according to claim 2, **characterised in that** on the end facing the housing (2), the steering shaft (8) is provided with a bevel gear (16), which cooperates with a corresponding toothed disc (17) fixed to the housing (2).

13. Soil cultivation appliance according to claim 2, **characterised in that** the steering shaft is constructed as a flexible shaft.

14. Soil cultivation appliance according to claim 13, **characterised in that** the flexible shaft is guided in a support body pivotable about a vertical axis (11).

15. Soil cultivation appliance according to claim 1, **characterised in that** the housing (2, 20) is provided with front and rear wheels (3, 4; 30, 41) and that the vertical axis (11, 25) is located between the front and rear wheels.

16. Soil cultivation appliance according to claim 15, **characterised in that** the spacing of the vertical axis (11, 25) in the longitudinal direction of the housing (2, 20) is less than 30 % of the spacing between the rear and front wheel axes.

17. Soil cultivation appliance according to claim 16, **characterised in that** the front wheel arrangement has one or two casters.

18. Soil cultivation appliance according to claim 16, **characterised in that** the wheel arrangements are not steerable and the contact surfaces (13) of the wheels (4a) have a limited sliding resistance with respect to lateral displacement.

19. Soil cultivation appliance according to claim 1, **characterised in that** the guide mechanism (8, 80) is removably fitted to the housing (2, 20).

## Revendications

1. Appareil de traitement du sol transportable, en particulier tondeuse à gazon équipée d'un compartiment (2, 20) permettant de recueillir des éléments de traitement (5, 50) et d'un dispositif de guidage manipulé à la main par un technicien de service et placé sur le compartiment (2, 20) de manière rotative par rapport à un axe (11, 25) essentiellement vertical par rapport au plan de traitement (25), **caractérisé en ce que** le dispositif de guidage est muni d'un dispositif de direction rotatif (7, 8, 70, 80) dont le mouvement de rotation sur ou dans le compartiment (2, 20) peut être converti en un couple de rotation (36) autour d'un axe vertical (11, 25).

2. Appareil de traitement du sol selon la revendication 1, **caractérisé en ce que** le dispositif de direction est composé d'un arbre de direction (8, 80) équipé d'une roue de direction (7, 70) adjacente au technicien de service ou d'un arceau de direction.

3. Appareil de traitement du sol selon la revendication 2, **caractérisé en ce que** l'arbre de direction (8, 80) se présente sous forme d'arbre télescopique.

4. Appareil de traitement du sol selon la revendication 2 ou 3, **caractérisé en ce que** l'arbre de direction 80 est orienté selon un angle prédéfini (β) par rapport au plan de traitement ou selon un plan parallèle (25) et est placé dans le compartiment (20) sur un corps de support (24) pouvant tourner autour de l'axe vertical (25) dans le compartiment (20).

5. Appareil de traitement selon la revendication 4, **caractérisé en ce que** l'arbre de direction (80) coupe le corps de support (24) et vient s'engager sur une surface de contact (32) du compartiment (20) à l'aide d'au moins un coude (30), cette surface de contact étant placée au moins à la distance (a) du corps de support (24) dans une direction parallèle au plan de traitement.

6. Appareil de traitement selon la revendication 5, **caractérisé en ce que** la surface de contact (32) est une partie d'un compartiment de guidage (23) contenu fixe dans le compartiment (20) pour le corps de support (24) formant une cheminée (33) avec des parois latérales (32, 32') orientées parallèlement au sens de déplacement (12) de l'appareil de traitement du sol, ces parois latérales servant alors de surfaces de contact.

7. Appareil de traitement du sol selon la revendication 6, **caractérisé en ce que** le coude de l'arbre de direction (80) se présente sous forme de bras latéral (30), équipé en son extrémité libre d'un corps coulissant (31) amené aux deux parois latérales (32, 32') de la cheminée (33).

8. Appareil de traitement du sol selon la revendication 7, **caractérisé en ce que** le corps coulissant (31) est de rotation symétrique.

9. Appareil de traitement du sol selon la revendication 7, **caractérisé en ce que** le corps coulissant (31) vient s'engager de manière rotative sur le bras (30).

10. Appareil de traitement du sol selon la revendication 5, **caractérisé en ce que** l'arbre de direction (8, 80) vient s'engager de manière articulée sur le côté du corps de support servant au technicien de service.

11. Appareil de traitement du sol selon la revendication 10, **caractérisé en ce qu'**une articulation croisée est proposée comme articulation.

12. Appareil de traitement du sol selon la revendication 2, **caractérisé en ce que** l'arbre de direction (8) est équipé, au niveau de l'extrémité adjacente au compartiment (2), d'une roue conique (16) interagissant avec un disque denté (17) correspondant fixé sur le compartiment (2).

13. Appareil de traitement du sol selon la revendication 2, **caractérisé en ce que** l'arbre de direction se présente sous forme d'arbre flexible.

14. Appareil de traitement du sol selon la revendication 13, **caractérisé en ce que** l'arbre flexible est amené dans un corps de support tournant autour d'un axe vertical (11).

15. Appareil de traitement du sol selon la revendication 1, **caractérisé en ce que** le compartiment (2, 20) comprend des roues avant et arrière (3, 4 ; 30, 41) et **en ce que** l'axe vertical (11, 25) se trouve entre les roues avant et arrière.

16. Appareil de traitement du sol selon la revendication 15, **caractérisé en ce que** la distance de l'axe vertical (11, 25) dans la partie longitudinale du compartiment (2, 20) représente moins de 30 % de la distance entre les essieux avant et arrière.

17. Appareil de traitement du sol selon la revendication 16, **caractérisé en ce que** l'agencement avant présente un ou deux roulements de direction.

18. Appareil de traitement du sol selon la revendication 16, **caractérisé en ce que** les agencements de roues ne peuvent pas être dirigés et **en ce que** les surfaces de roulement (13) des roues (4a) présentent une faible résistance au glissement par rapport au déplacement latéral.

19. Appareil de traitement du sol selon la revendication 1, **caractérisé en ce que** le dispositif de guidage (8, 80) vient s'engager de manière amovible sur le compartiment (2, 20).
